# EUROPÄISCHE PATENTANMELDUNG

(11) **EP 2 023 260 A1**
(43) Veröffentlichungstag der Anmeldung: **11.02.2009**
(21) Anmeldenummer: 07015566.8
(22) Anmeldetag: 08.08.2007
(51) Int. Cl.: G06F 21/20, G06F 17/30

(54) **Zentraler Profilserver und Verfahren zum Betreiben eines Client-Server Systems**

(71) Anmelder: HURRA Communications GmbH, 70599 Stuttgart (DE)
(72) Erfinder: Schweier, René, 70599 Stuttgart (DE)
(74) Vertreter: Schäfer, Wolfgang

(57) **Zusammenfassung**

Um die Anzahl verwertbarer Profilinformationen in einem Client-Server System (1a, 1b) zu erhöhen, und damit die Übertragung nicht-relevanter Informationen zu reduzieren, wird vorgeschlagen, dass der Client (12) mittels der von dem Informationsserver (2a, 2b) übermittelten Informationen automatisch veranlasst wird, eine Anfrage an den zentralen Profilserver (6) zu senden. Dies ermöglicht es dem zentralen Profilserver (6), den Benutzer (11) oder den Client (12) mittels einer zentralen Benutzerkennung zu identifizieren. Falls der Benutzer (11) oder der dem Benutzer (11) zugeordnete Client (12) bei dem lokalen Profilserver (4a, 4b) bekannt ist, veranlasst der zentrale Profilserver (6), dass der lokale Profilserver (4a, 4b) eine Benutzerkennung, unter der der Benutzer (11) oder der Client (12) bei dem lokalen Profilserver (4a, 4b) bekannt ist, an den zentralen Profilserver (6) übermittelt. Der zentrale Profilserver (6) führt für den Benutzer (11) bzw. den Client (12) eine Benutzerkennungsliste (10) und fügt dieser eine den jeweiligen lokalen Profilserver (6) bezeichnende Kennung und die lokale Benutzerkennung hinzu. In Abhängigkeit von dem Auftreten eines vorgebbaren Ereignisses fordert der zentrale Profilserver (6) von dem lokalen Profilserver (4a, 4b) eine Profilinformation unter Angabe der jeweiligen lokalen Benutzerkennung an und der lokale Profilserver (4a, 4b) übermittelt die Profilinformationen an den zentralen Profilserver (6).

## Beschreibung

Die Erfindung betrifft ein Verfahren zum Betreiben eines Client-Server Systems, bei dem ein Benutzer mittels eines Clients von einem Informationsserver eine Information anfordert und der Informationsserver Informationen an den Client übermittelt, wobei dem Informationsserver mindestens ein lokaler Profilserver zugeordnet ist.

Die Erfindung betrifft ferner einen zentralen Profilserver, der über ein Kommunikationsnetzwerk mit mindestens einem lokalen Profilserver verbindbar ist.

Die Erfindung betrifft auch ein Client-Server System, das einen Informationsserver, einen lokalen Profilserver, einen zentralen Profilserver und einen Client umfasst.

Die Erfindung betrifft schließlich ein Computerprogramm, das auf einem mit einem Kommunikationsnetzwerk verbundenen Client-Server System ablauffähig ist.

Als Server wird ein mit einem Kommunikationsnetzwerk verbundener Computer bezeichnet, auf dem eine Software abläuft, mittels der der Server spezifizierte Dienste bereitzustellt. Als Server wird insbesondere aber auch die Software selbst bezeichnet, die diese Dienste zur Verfügung stellt. Derartige Dienste können beispielsweise das Bereitstellen von Informationen sein. Die Dienste werden typischerweise durch so genannte Clients in Anspruch genommen, indem von dem Client eine Anfrage an den Server über ein Kommunikationsnetzwerk übermittelt wird. Der Server wertet die eingehende Anfrage aus und übermittelt der Anfrage entsprechende Informationen.

Häufig werden Informationen von einem Server in Form von so genannten Netzwerkseiten, die auch als Internet-Seiten oder Web-Pages bezeichnet werden, an einen die Informationen anfordernden Client übermittelt. Zur Beschreibung des Inhalts einer Netzwerkseite wird eine Seitenbeschreibungssprache, beispielsweise HTML (Hypertext Markup Language) verwendet. Diese ermöglicht es, den Inhalt, also die darzustellenden Informationen, sowie die Darstellung der Informationen in der Netzwerkseite zu beschreiben. Fordert der Client Informationen von dem Informationsserver an, so übermittelt der Informationsserver ein die angeforderten Informationen enthaltendes HTML-Dokument an den Client.

Die von dem Informationsserver an den Client zu übermittelnden Netzwerkseiten können bereits vor der Anforderung durch den Client erzeugt und an geeigneter Stelle abgespeichert sein. Derartige Netzwerkseiten werden als statische Netzwerkseiten bezeichnet. Häufig wird von einem Client jedoch eine sehr spezifische Anfrage an den Server gestellt, so dass dieser die angeforderten Informationen in Abhängigkeit von der Anfrage auswählt und eine diese Informationen enthaltende Netzwerkseite dynamisch erzeugt.

Netzwerkseiten enthalten häufig Verweise, so genannte Links, zu weiteren Informationen beziehungsweise Netzwerkseiten. Wenn beispielsweise die von dem Informationsserver an den Client zu übermittelnden Informationen auf mehrere Netzwerkseiten verteilt sind, werden einzelne dieser Seiten Links zu weiteren Seiten hinzugefügt, so dass diese weiteren Netzwerkseiten durch Aktivieren der Links angefordert werden können.

Grundsätzlich erhöht jede Anforderung von Netzwerkseiten beziehungsweise von auf weiteren Netzwerkseiten dargestellten Informationen die Belastung des Kommunikationsnetzwerks, da sowohl eine Anfrage, als auch eine Antwort übermittelt werden müssen. Ferner ist die Informationsmenge üblicherweise sehr groß, so dass dies das Kommunikationsnetz insbesondere dann unnötigerweise belastet, wenn die Informationen von keiner oder nur unzureichender Relevanz für den Client bzw. den Benutzer des Clients sind. Um relevante Informationen zu erhalten, muss ein Benutzer häufig eine Vielzahl von Anfragen an einen oder mehrere Informationsserver übermitteln, die ihrerseits eine Vielzahl von Informationen an den Client bzw. den Benutzer übermitteln, bis der Benutzer endlich eine relevante Information erhält. Um derartige Belastungen zu reduzieren, wird deshalb angestrebt, Informationen auszuwählen, die von besonders hoher Relevanz für den anfragenden Client beziehungsweise den Benutzer, dem der Client zugeordnet ist, sind.

Ist der Informationsserver als Suchmaschine ausgebildet und fordert der Client von der Suchmaschine Informationen mittels einer einen Suchbegriff beinhaltenden Suchanfrage an, so ermittelt die Suchmaschine nach einem vorgebbaren Algorithmus anhand des Suchbegriffs Informationen, die mit dem Suchbegriff assoziiert werden und erzeugt automatisch eine dynamische Netzwerkseite, die Links zu den ermittelten Informationen umfasst. Hierbei ist es bekannt, die Reihenfolge der dargestellten Links beziehungsweise Informationen in Abhängigkeit davon zu bestimmen, wie häufig die Informationen bereits von anderen Clients angefordert worden sind. Die am häufigsten angeforderten Informationen werden dann an erster Stelle angezeigt, da davon ausgegangen wird, dass besonders häufig angeforderte Informationen eine höhere allgemeine Relevanz haben. Dies führt zu einer Entlastung des Kommunikationsnetzwerks, da die zuerst gesendeten Informationen im statistischen Mittel von höherer Relevanz sind und somit von einer Vielzahl von Clients keine weiteren Suchergebnisse angefordert werden müssen.

Es ist auch bekannt, einem Informationsserver einen lokalen Profilserver zuzuordnen. Wird von einem Benutzer, beziehungsweise von einem dem Benutzer zugeordneten Client, eine Anfrage an den Server übermittelt, so wird der Client beziehungsweise der Benutzer zunächst von dem Server identifiziert. Es wird dann von dem Profilserver eine dem Benutzer beziehungsweise dem Client zugeordnete Profilinformation angefordert und die Profilinformation bei der Auswahl der zu übermittelnden Informationen berücksichtigt. Derartige Profilinformation beschreiben beispielsweise Interessen des Benutzers, Alter, Geschlecht, Wohnort, gekaufte Produkte, usw. Unter Verwendung bekannter Klassifizierungsalgorithmen erfolgt dann unter Berücksichtigung der Suchanfrage und der Profilinformationen eine Auswahl von Informationen, deren Relevanz gesteigert ist.

Typischerweise fordert ein Client beziehungsweise ein Benutzer Informationen von einer Vielzahl von unterschiedlichen Servern an. Um jeweils eine möglichst hohe Relevanz der an den Client beziehungsweise Benutzer zu übermittelnden Informationen zu erreichen, muss deshalb jeder Server über ein Profil des Benutzers verfügen. Dies wird häufig dadurch erreicht, dass dem Server ein Profilserver zugeordnet ist. Hierbei ist es jedoch möglich, dass einzelne Profilserver über keine den Client bzw. Benutzer betreffende Profilinformationen oder nur über eine unzureichende Anzahl derartiger Profilinformationen verfügen. Ferner ist es möglich, dass die Profilinformationen eines Profilservers nicht mehr aktuell sind. In diesen Fällen ist die Auswahl von für den Benutzer bzw. Client relevanten Informationen erschwert bzw. nicht möglich. Der Benutzer muss folglich wieder selbst nach relevanten Informationen suchen, was wieder zu der unerwünschten Belastung des Kommunikationsnetzwerks führt.

Um die sich aus dem Vorhandensein einer Vielzahl von lokalen Profilservern ergebenden Nachteile zu vermindern ist es bekannt, zentrale Profilserver vorzusehen. Ein zentraler Profilserver zeichnet sich dadurch aus, dass eine Mehrzahl von Informationsservern auf denselben zentralen Profilserver zugreifen können, um ein einem Benutzer zugeordnetes Profil beziehungsweise eine einem Client zugeordnete Profilinformation abzufragen und die erhaltene Profilinformation für die Auswahl von für den Benutzer oder den Client relevanten Informationen zu nutzen.

Profilinformationen sind grundsätzlich sensible Informationen, deren Weitergabe an beliebige Dritte häufig nicht erwünscht ist. Ein zentraler Profilserver wird deshalb lediglich mit einigen wenigen Informationsservern zusammenarbeiten können, wobei diese wenigen Informationsserver überwiegend ein Abkommen über die Behandlung vertraulicher Daten beziehungsweise sensibler Profilinformationen abgeschlossen haben. Um einen gesicherten Umgang mit den sensiblen Profilinformationen zu gewährleisten, wird deshalb von einer Vielzahl von Informationsservern kein zentraler Profilserver betrieben, sondern es werden lediglich lokale Profilserver verwendet und es werden die Nachteile der lokalen Profilserver in Kauf genommen.

Ein noch größerer Nachteil bei der Verwendung zentraler Profilserver liegt jedoch darin, dass ein Benutzer beziehungsweise ein dem Benutzer zugeordneter Client bei dem Informationsserver mit einer Benutzerkennung identifiziert werden muss, die den Benutzer auch bei dem zentralen Profilserver identifiziert, da nur dann von dem Informationsserver ein Profil des Benutzers abgefragt werden kann.

Zur Erzeugung der Benutzerkennung ordnet ein Informationsserver beziehungsweise ein lokaler Profilserver einem Benutzer beziehungsweise einem Client, der erstmalig eine Information anfordert, eine Benutzerkennung zu. Hierzu veranlasst der Informationsserver beispielsweise den Client, die Benutzerkennung bei dem Client selbst abzuspeichern. Dies wird mittels eines so genannten Cookies erreicht. Bei dem als "Setzen eines Cookies" bezeichneten Verfahren wird die von dem Informationsserver erzeugte Benutzerkennung an den Client übermittelt und dort abgespeichert. Fordert der Client von dem Informationsserver eine weitere Information an, so kann die Benutzerkennung an den Informationsserver übermittelt werden. Je häufiger der Client mit dem Informationsserver kommuniziert, eine desto größere Anzahl von Profilinformationen kann aus der Kommunikation abgeleitet und bei einem lokalen Profilserver abgespeichert werden.

Ein Cookie kann jedoch regelmäßig nur zu dem Informationsserver zurückgesandt werden, der das Setzen des Cookies veranlasst hat. Verwaltet ein Informationsserver seine eigenen Profilinformationen mittels eines lokalen Profilservers, so ist dieses Verfahren zur automatischen Identifizierung eines Clients vorteilhaft anwendbar. Sollen Profilinformationen mehrerer Informationsserver jedoch von einem zentralen Profilserver verwaltet werden, so kann dieser die Identifikation des Benutzers beziehungsweise Clients nicht durchführen, da der Client für jeden Informationsserver ein separates Cookie abgespeichert hat und dieses jeweils nur an den Informationsserver, nicht jedoch an den zentralen Profilserver übermitteln kann. Ferner ist dem Benutzer bzw. dem Client bei jedem Informationsserver eine unterschiedliche Benutzerkennung zugeteilt. Folglich kann ein Informationsserver nicht erkennen, ob ein Client bei einem anderen Informationsserver möglicherweise bereits bekannt ist. Damit kann aber auch ein zentraler Profilserver nicht erkennen, ob ein Benutzer, für den von einem ersten Informationsserver ein Profil abgelegt worden ist, mit einem Benutzer übereinstimmt, für den von einem anderen Informationsserver ein Profil abgelegt worden ist.

Im Ergebnis beschränkt sich die Funktionalität von bekannten zentralen Profilservern deshalb darauf, für jeden einzelnen Informationsserver eine separate Profildatenbank zur Verfügung zu stellen, wobei deren Inhalte völlig unabhängig voneinander sind, auch wenn diese möglicherweise zumindest teilweise dieselben Benutzer betreffen.

Aufgabe der Erfindung ist es, die Anzahl der verwertbaren Profilinformationen zu erhöhen, die für die Auswahl von für einen Benutzer oder Client relevanten Informationen zur Verfügung stehen. Damit soll erreicht werden, dass die Menge nicht-relevanter Informationen, die üblicherweise über das Kommunikationsnetzwerk übertragen werden, reduziert wird um damit eine Reduzierung der Belastung des Kommunikationsnetzwerks sowie der Informationsserver zu erreichen.

Ausgehend von einem Verfahren zum Betreiben eines Client-Server Systems der eingangs genannten Art wird die Aufgabe erfindungsgemäß dadurch gelöst, dass der Client mittels der von dem Informationsserver übermittelten Informationen automatisch veranlasst wird, eine Anfrage an den zentralen Profilserver zu senden. Dies ermöglicht es dem zentralen Profilserver den Benutzer oder den Client mittels einer zentralen Benutzerkennung zu identifizieren. Dies kann beispielsweise dadurch erreicht werden, dass bei der an den zentralen Profilserver übermittelten Anfrage automatisch eine Kennung, beispielsweise eine IP-Adresse oder ein Cookie, das auf Veranlassung des zentralen Profilserver zuvor gesetzt worden ist, an den zentralen Profilserver zu übermittelt wird.

Falls der Benutzer oder der dem Benutzer zugeordnete Client bei dem lokalen Profilserver bekannt ist, veranlasst der zentrale Profilserver, dass der lokale Profilserver eine Benutzerkennung, unter der der Benutzer oder der Client bei dem lokalen Profilserver bekannt ist und die im folgenden als lokale Benutzerkennung bezeichnet wird, an den zentralen Profilserver übermittelt.

Vorzugsweise wird hierbei eine Mehrzahl von lokalen Profilservern aufgefordert, die jeweilige lokale Benutzerkennung an den zentralen Profilserver zu übermitteln. Der zentrale Profilserver führt für den Benutzer bzw. den Client eine Benutzerkennungsliste und fügt dieser eine den jeweiligen lokalen Profilserver bezeichnende Kennung und die lokale Benutzerkennung hinzu, falls die lokale Benutzerkennung nicht bereits in der Benutzerkennungsliste aufgeführt ist.

Vorzugsweise wird automatisch bereits dann eine den Client oder den Benutzer betreffende Profilinformation an den zentralen Profilserver übermittelt, wenn der Client durch die von dem lokalen Profilserver übermittelten Informationen automatisch dazu veranlasst wird, eine Anfrage an den zentralen Profilserver zu senden. Es ist auch denkbar, dass eine Profilinformation von dem lokalen Profilserver an den zentralen Profilserver zusammen mit der lokalen Benutzerkennung übermittelt wird.

Zumindest wenn beides nicht der Fall ist, fordert der zentrale Profilserver in Abhängigkeit von dem Auftreten eines vorgebbaren Ereignisses von dem lokalen Profilserver oder vorzugsweise von einer Mehrzahl von lokalen Profilservern eine Profilinformation unter Angabe der jeweiligen lokalen Benutzerkennung an und der lokale Profilserver bzw. die lokalen Profilserver übermitteln die Profilinformationen an den zentralen Profilserver. Ein vorgebbares Ereignis kann beispielsweise ein vorgegebener Zeitpunkt sein, so dass der zentrale Profilserver automatisch zu diesem Zeitpunkt aktualisiert wird. Das vorgebbare Ereignis kann aber insbesondere auch die Anforderung einer Profilinformation von dem zentralen Profilserver beispielsweise durch einen Informationsserver sein, der die Profilinformation für die Auswahl relevanter Informationen benötigt. In diesem Fall kann der zentrale Profilserver sicherstellen, dass stets aktuelle Profilinformationen an einen Informationsserver übermittelt werden.

Die Profilinformationen, die von den lokalen Profilservern an den zentralen Profilserver übermittelt werden, können auf dem zentralen Profilserver abgespeichert werden. Dadurch wird erreicht, dass der zentrale Profilserver selbsttätig Profilinformationen eines Benutzers beziehungsweise eines einem Benutzer zugeordneten Clients von dem lokalen Profilserver abfragen kann und somit die auf dem zentrale Profilserver abgespeicherten Profilinformation stets aktuell halten kann. Ferner kann damit ein so genanntes "Spiegeln" der auf dem lokalen Profilserver abgespeicherten Profilinformationen erreicht werden. Fällt der lokale Profilserver aus, so ist gewährleistet, dass die Profilinformationen zumindest über den zentralen Profilserver noch erreichbar sind. Diese können dann beispielsweise auch bei einer möglicherweise erforderlichen Neuinstallation des lokalen Profilservers von dem zentrale Profilserver angefordert werden.

Wird an den zentralen Profilserver eine Anfrage nach einer dem Benutzer zugeordneten Profilinformationen gestellt, so umfasst die Anfrage die Übermittlung der zentralen Benutzerkennung. Der zentrale Profilserver ermittelt daraufhin die zugehörige lokale Benutzerkennung, übermittelt diese an den lokalen Profilserver zusammen mit einer Anfrage, die den lokalen Profilserver veranlasst, seinerseits eine oder mehrere Profilinformationen an den zentralen Profilserver zu übermitteln. Der zentrale Profilserver fungiert damit wie ein intelligenter Übersetzer von Benutzerkennungen, wobei nach außen lediglich die zentrale Benutzerkennung bekannt sein muss. Dies ermöglicht beispielsweise den Betrieb einer Mehrzahl von lokalen Profilservern, die jedoch nach außen lediglich wie ein einziger Profilserver erscheinen.

Die vorliegende Erfindung ermöglicht damit eine erhöhte Verfügbarkeit von Profilinformationen und einen erhöhten Zugang von Profilinformationen, die einem Benutzer beziehungsweise einem dem Benutzer zugeordneten Client zugeordnet sind und üblicherweise nur von lokalen Profilservern, die mehreren Informationsservern zugeordnet sind, abgespeichert werden. Durch die erhöhte Verfügbarkeit von Profilinformationen wird eine präzisere Auswahl von Informationen ermöglicht, was die Relevanz steigert und das Kommunikationsnetzwerk dadurch entlastet, dass die Anzahl nicht relevanter Informationen, die über das Kommunikationsnetzwerk übertragen werden, deutlich verringert wird.

Gemäß einer vorteilhaften Ausführungsform des erfindungsgemäßen Verfahrens überprüft der zentrale Profilserver die Plausibilität der von dem lokalen Profilserver übermittelten Profilinformation und entscheidet in Abhängigkeit von einem Ergebnis der Überprüfung, ob die Profilinformation verworfen oder abgespeichert bzw. weitergeleitet wird. Für die Prüfung der Plausibilität wird beispielsweise ein Alter der Profilinformation ausgewertet und es wird nur dann eine Profilinformation als plausibel und damit verwertbar eingestuft, wenn deren Alter einen vorgebbaren Wert nicht übersteigt. Eine Prüfung der Plausibilität kann auch dadurch erreicht werden, dass die Profilinformation mit von anderen lokalen Profilservern übermittelten, den Client oder Benutzer betreffenden Profilinformationen verglichen wird und bestimmt wird, ob und gegebenenfalls wie weit die Profilinformationen voneinander abweichen. Es kann ferner vorgesehen sein, dass dem lokalen Profilserver oder jedem lokalen Profilserver ein Vertrauenswert zugeordnet wird und dieser ausgewertet wird. Widersprechen sich hierbei Profilinformationen von unterschiedlichen lokalen Profilservern bezüglich desselben Benutzers, so kann diejenige Profilinformation ausgewählt werden, die von dem lokalen Profilserver mit dem höchsten Vertrauenswert stammt.

Vorzugsweise erzeugt der zentrale Profilserver eine eindeutige Sitzungskennung und veranlasst, dass diese zusammen mit der lokalen Benutzeridentifikation an den lokalen Profilserver übermittelt wird. Der lokale Profilserver übermittelt die lokale Benutzerkennung dann zusammen mit der Sitzungskennung an den zentralen Profilserver. Dies ermöglicht es dem zentralen Profilserver, die erhaltene lokale Benutzerkennung besonders sicher dem Benutzer zuzuordnen.

Weiterhin vorteilhaft ist es, wenn der lokale Profilserver nur Profilinformationen an den zentralen Profilserver übermittelt, die nicht sensibel sind und beispielsweise als vertraulich eingestuft sind oder ein dem zentralen Profilserver zugeordneter Vertrauenswert einen vorgebbaren Schwellwert überschreitet. Damit wird sichergestellt, dass von einem lokalen Profilserver nicht alle Profilinformationen an den zentralen Profilserver übertragen werden können, wenn dieser nicht einen hierfür notwendigen Vertrauenswert aufweist.

Ferner kann vorgesehen sein, dass der zentrale Profilserver auf eine Anfrage nach einer Profilinformation nur diejenigen Profilinformationen übermittelt, die von dem lokalen Profilserver stammen, dessen lokale Benutzeridentifikation mit der in der Anfrage genannten lokalen Benutzeridentifikation übereinstimmt. Damit kann sichergestellt werden, dass beispielsweise nur der lokale Profilserver auf alle von diesem bei dem zentralen Profilserver abgespeicherten und von diesem stammende Profilinformationen zugreifen kann, wohingegen andere Informationsserver oder Profilserver nur auf nicht-sensible Profilinformationen zugreifen können.

Insgesamt können damit sensible und nicht sensible Profilinformation derart verwaltet werden, dass beispielsweise alle oder eine Vielzahl von Informationsservern Zugriff auf nicht-sensible Profilinformationen haben, wohingegen sensible Profilinformationen nur an den Informationsserver beziehungsweise lokalen Profilserver übermittelt werden, die die sensible Profilinformation erzeugt beziehungsweise ermittelt haben oder hierzu eigens dadurch berechtigt sind, dass diese die entsprechende lokale Benutzerkennung kennen.

Hierzu kann vorgesehen sein, dass zwar alle Arten von Profilinformationen bei dem zentrale Profilserver abgespeichert werden, jedoch sensible Profilinformationen nur an diejenigen Informationsserver übermittelt werden, die über die lokale Benutzerkennung verfügen oder denen ebenfalls ein entsprechender Vertrauenswert zugeordnet ist. Informationsserver, die eine Anfrage nach Profilinformationen lediglich mit der zentralen Benutzerkennung versehen, erhalten nur die nicht-sensiblen Profilinformationen. Es ist auch möglich, dass der lokale Profilserver nur die nicht-sensiblen Informationen an den zentralen Profilserver übermittelt. Damit ist zwar eine noch höhere Sicherheit der sensiblen Profilinformationen gewährleistet, jedoch ist keine vollständige Spiegelung der auf dem lokalen Profilserver abgespeicherten Profilinformationen durch den zentralen Profilserver möglich.

Vorzugsweise ist der Informationsserver als Suchmaschine ausgebildet. Dort ist es besonders wichtig, dass die in Abhängigkeit von einer Suchanfrage erzeugten Informationen von hoher Relevanz für den Benutzer sind. Ferner ist es bekannt, dass eine Suchmaschine zusätzlich zu den Suchergebnissen so genannte Zusatzinformationen an den Benutzer übermittelt. Hierbei wird versucht, weitere besonders relevante Informationen an den Benutzer zu übermitteln, so dass dieser keine nochmalige Suchanfrage an die Suchmaschine richten muss.

Die Aufgabe wird auch gelöst durch einen zentrale Profilserver der eingangs genannten Art, der zur Durchführung des erfindungsgemäßen Verfahrens hergerichtet ist.

Die Aufgabe wird ferner durch ein Client-Server System der eingangs genannten Art gelöst, wobei das Client-Server System Mittel zur Durchführung des erfindungsgemäßen Verfahrens aufweist.

Von besonderer Bedeutung ist die Realisierung dieser Erfindung in Form eines Computerprogramms. Dabei ist das Computerprogramm auf einem Client-Server System, insbesondere auf einem zentrale Profilserver, ablauffähig und zur Ausführung des erfindungsgemäßen Verfahrens programmiert. Selbstverständlich können zur Ausführung des erfindungsgemäßen Verfahrens Teile des Computerprogramms auf unterschiedlichen Computern beziehungsweise Servern ablaufen. Die Erfindung wird also durch das Computerprogramm realisiert, so dass dieses Computerprogramm in gleicher Weise die Erfindung darstellt wie das Verfahren, zu dessen Ausführung das Computerprogramm geeignet ist.

Das Computerprogramm ist vorzugsweise auf einem optischen oder magnetischen Speicherelement, beispielsweise einem Random-Access-Memory, einem Read-Only-Memory oder einem Flash-Memory abgespeichert.

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung. Es zeigen:
- Figur 1: ein Client-Server-System, das zur Durchführung des erfindungsgemäßen Verfahrens hergerichtet ist, gemäß einer ersten Ausführungsform;
- Figur 2: ein Client-Server-System, das gemäß einer zweiten Ausführungsform zur Durchführung des erfindungsgemäßen Verfahrens hergerichtet ist;
- Figur 3: eine schematische Darstellung eines Ablaufdiagramms gemäß einer ersten bevorzugten Ausführungsform des erfindungsgemäßen Verfahrens;

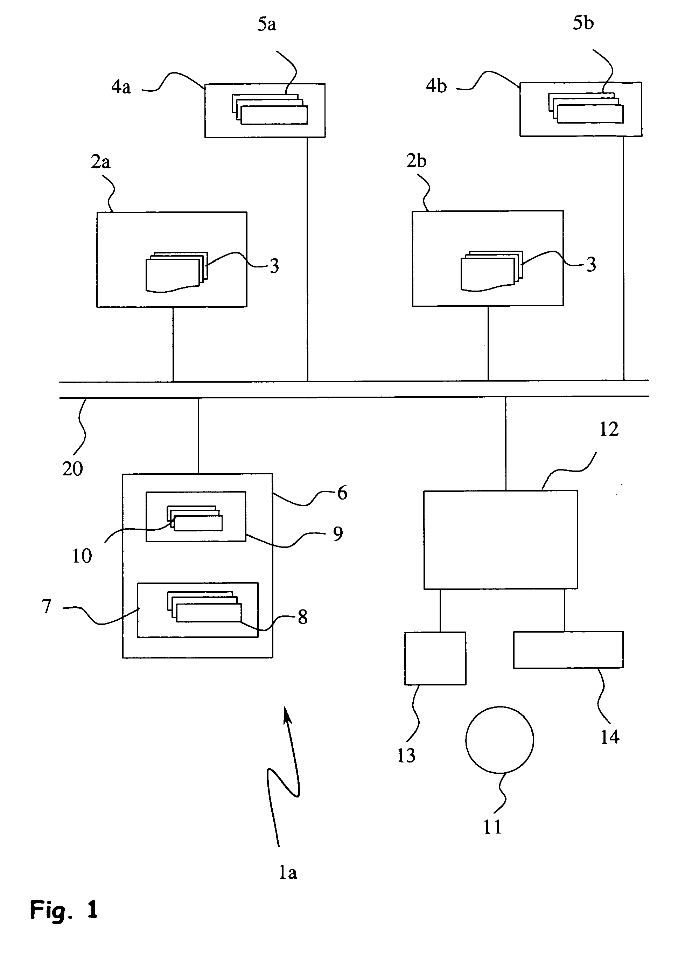

In Figur 1 ist ein Client-Server-System 1a dargestellt, das zwei Informationsserver 2a und 2b, zwei lokale Profilserver 4a und 4b, einen zentralen Profilserver 6 und einen Client 12 umfasst, die allesamt mit einem Kommunikationsnetzwerk 20, beispielsweise dem Internet, verbunden sind. Die Informationsserver 2a, 2b weisen Informationen 3 auf, die beispielsweise über statische oder dynamische Netzwerkseiten von dem Client 12 abrufbar sind. Die Informationen 3 können in bekannter Weise in einer Vielzahl unterschiedlicher Datenformate vorliegen. Die Informationsserver 2a, 2b können auf eine bestimmte Informationsart oder einen bestimmten Themenbereich spezialisiert sein, insbesondere können die Informationsserver 2a, 2b beispielsweise als Suchmaschine, als Online-Zeitung, als Forum oder als Online-Shop ausgebildet sein.

Auf dem lokalen Profilserver 4a sind Profile 5a und auf dem lokalen Profilserver 4b sind Profile 5b abgespeichert. Die Profile 5a, 5b enthalten Profilinformationen von Benutzern, beispielsweise eines Benutzers 11, dem der Client 12 zugeordnet ist. Die Profilinformationen beschreiben beispielsweise ein besonderes Interesse, ein Alter, eine Altersgruppe, eine soziale Schicht, bei einer Suchmaschine eingegebene Suchbegriffe, einen Wohnort, besondere Interessen des Benutzers 11 oder Produkte, die innerhalb eines bestimmten Zeitraums beispielsweise bei einem Online-Shop gekauft worden sind. In dem in Figur 1 gezeigten Ausführungsbeispiel sind der lokale Profilserver 4a dem Informationsserver 2a und der lokale Profilserver 4b dem Informationsserver 2b zugeordnet. Selbstverständlich können eine Vielzahl weiterer Profilserver vorgesehen sein. Ferner können Profilserver auch mehreren Informationsservern zugeordnet sein.

Der Client 12 weist ein Display 13 und eine Tastatur 14 zur Interaktion mit dem Benutzer 11 auf. Der Client 12 kann beispielsweise als Personal Computer, Smartphone, Notebook oder PDA (Personal Digital Assistent) ausgebildet sein. Ist der Informationsserver 2a, 2b als Suchmaschine ausgebildet und startet der Benutzer 11 mittels des Clients 12 bei dem Informationsserver 2a, 2b eine Suchanfrage, so kann der Informationsserver 2a veranlassen, dass der Suchbegriff als Profilinformation in einem dem Benutzer 11 zugeordneten Profil 5a bei dem lokalen Profilserver 4a abgespeichert wird. Ist der Informationsserver 2b als Online-Shop ausgebildet und kauft der Benutzer 11 über den Online-Shop ein Produkt, so kann vorgesehen sein, dass die Adresse, das Alter und Informationen über das gekaufte Produkt als Profilinformationen in einem dem Benutzer 11 zugeordneten Profil 5b bei dem lokalen Profilserver 4b abgespeichert werden.

In Figur 1 ist ferner ein zentraler Profilserver 6 dargestellt, der einen Speicherbereich 7 aufweist, in dem Profile 8 abgespeichert sind. Der Speicherbereich 7 kann beispielsweise als Datenbank ausgebildet sein. Auf dem zentralen Profilserver 6 sind ferner Benutzerkennungen 10 in einem Speicherbereich 9 abgespeichert, wobei der Speicherbereich 9 ebenfalls als Datenbank ausgebildet sein kann. Die Datenbanken können selbstverständlich ebenfalls in Hardware realisiert sein, so dass der zentrale Profilserver 6 beispielsweise über das Kommunikationsnetzwerk 20 mit den Datenbanken kommuniziert. Insbesondere kann vorgesehen sein, dass die Benutzerkennungen ihrerseits mittels eines Servers verwaltet werden.

Jede der Benutzerkennungen 10 ermöglicht die Identifikation eines Benutzers, beispielsweise des Benutzers 11, wenn dieser mit dem zentralen Profilserver 6 interagiert. Eine Benutzerkennungsliste 10 kann beispielsweise eine Zeichenkette sein, die von dem zentralen Profilserver 6 erzeugt wird, wenn der Benutzer 11 ein erstes Mal mit dem zentralen Profilserver 6 kommuniziert. Eine derartige Benutzerkennungsliste 10 kann dann beispielsweise als so genanntes Cookie bei dem dem Benutzer zugeordneten Client 12 abgespeichert werden. Immer wenn der Benutzer 11 mittels des Client 12 mit dem zentralen Profilserver 6 kommuniziert, wird automatisch das Cookie an den zentralen Profilserver 6 übermittelt, so dass der Benutzer 11 beziehungsweise der dem Benutzer 11 zugeordnete Client 12 von dem lokalen Profilserver 6 identifiziert werden kann.

Selbstverständlich existieren eine Vielzahl weiterer Möglichkeiten, einen Benutzer 11 beziehungsweise einen einem Benutzer 11 zugeordneten Client 12 zu identifizieren. Hierzu kann beispielsweise die so genannte IP-Adresse herangezogen werden, die bei einer Anfrage des Clients 12 an den lokalen Profilserver 6 automatisch mit übermittelt wird. Ist das Kommunikationsnetzwerk 20 als Internet ausgebildet, so kommuniziert der Client 12 mit den Informationsservern 2a, 2b und dem zentralen Profilserver 6 häufig mittels eines als "Browser" bezeichneten speziellen Computerprogramms, das auf dem Client 12 abläuft und in der Lage ist, HTML-Dokumente zu interpretieren und mittels einer grafischen Oberfläche eine Vielzahl von Datenformaten auf dem Display 13 darzustellen. Häufig ist dem Browser eine Identifikation zugeordnet, die bei einer Anfrage an einen Informationsserver 2a, 2b automatisch mitgesendet werden kann. Eine Benutzerkennung, die möglicherweise in der Benutzerkennungsliste 10 abgespeichert ist, kann sich folglich beispielsweise aus einer Kombination einer IP-Adresse und einer Browseridentifikation zusammensetzen. Selbstverständlich sind eine Vielzahl weiterer Möglichkeiten denkbar, Benutzerkennungen zu realisieren. Hierzu können beispielsweise weitere Kennungen von Software- oder Hardwareelementen herangezogen werden, die auf dem Client 12 installiert beziehungsweise implementiert sind.

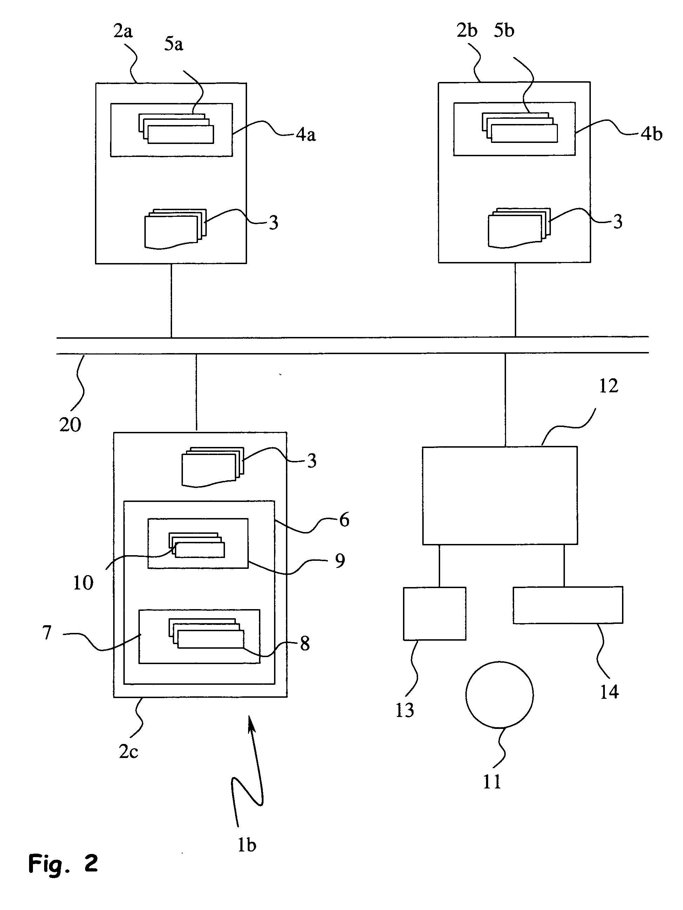

In Figur 2 ist ein Client-Server-System 1b dargestellt. Die Komponenten des Client-Server-Systems 1b, die den Komponenten des Client-Server-Systems 1a entsprechen, sind mit denselben Bezugszeichen versehen. In dem Client-Server-System 1b sind der lokale Profilserver 4a in den Informationsserver 2a und der lokale Profilserver 4b in den Informationsserver 2b integriert und beispielsweise in Software realisiert.

Der zentrale Profilserver 6 ist ebenfalls einem Informationsserver 2c zugeordnet und dort beispielsweise in Software realisiert.

Die Client-Server-Systeme 1a, 1b stellen beispielhafte Ausführungsformen dar, die über eine Vielzahl weiterer Komponenten verfügen, wobei diese jedoch aus Gründen der Übersichtlichkeit in den Figuren 1 und 2 nicht dargestellt sind. Insbesondere kann das Kommunikationsnetzwerk 20 eine Vielzahl weiterer Informationsserver, lokaler Profilserver und Clients aufweisen. Ferner kann das erfindungsgemäße Client-Server-System 1a, 1b auch eine Mehrzahl weiterer lokaler Profilserver und eine Mehrzahl weiterer Informationsserver aufweisen.

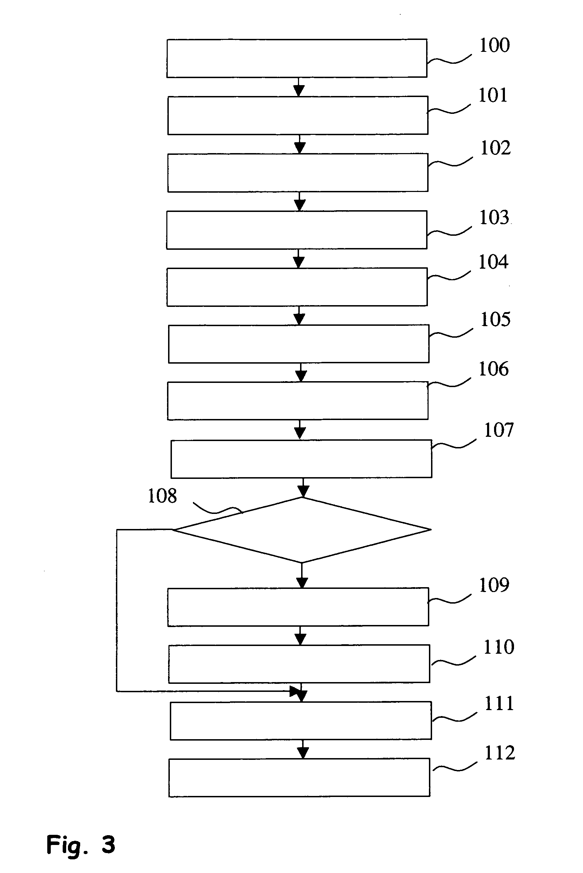

Anhand des in Figur 3 schematisch dargestellten Ablaufdiagramms wird der Ablauf des erfindungsgemäßen Verfahrens bezüglich unterschiedlicher Ausführungsformen des Verfahrens sowie unterschiedlicher Ausführungsformen des Client-Server-Systems 1a, 1b gezeigt.

Die in Figur 3 dargestellte Ablaufdiagramm beginnt in einem Schritt 100, in dem der Benutzer 11 mittels des Clients 12 von einem Informationsserver 2a, 2b eine Information anfordert. Ist der Informationsserver 2a, 2b als Suchmaschine ausgebildet, so wird zusammen mit der Informationsanfrage ein Suchbegriff von dem Client 12 an den Informationsserver 2a, 2b übermittelt. Eine Informationsanfrage kann aber beispielsweise auch dadurch gestartet werden, dass der Benutzer 11 mittels des Clients 12 einen auf einer bereits erhaltenen Netzwerkseite dargestellten Link aktiviert, was wiederum automatisch eine Anforderung von Informationen von demselben oder einem anderen Informationsserver 2a, 2b bewirkt. In dem Schritt 100 wird eine Netzwerkseite, die die angeforderten Informationen enthält, von dem Informationsserver 2a, 2b an den Client 12 übermittelt.

In einem Schritt 101 empfängt der Client 12 die Netzwerkseite. Diese wird mittels eines Computerprogramms, beispielsweise des Browsers, in einem Schritt 102 interpretiert und dargestellt. Die Netzwerkseite enthält ein Element, das den Client 12 automatisch veranlasst, in einem Schritt 103 eine Anforderung an den zentralen Profilserver 6 zu übermitteln. Diese Anforderung veranlasst den zentralen Profilserver 6 automatisch, die Schritte 104 und 105, beispielsweise durch Abarbeiten eines Skripts, auszuführen. Zusammen mit der Anforderung an den zentralen Profilserver 6 wird beispielsweise die IP-Adresse und/oder eine Browser-ID an den zentralen Profilserver 6 übertragen. Hat der Client 12 bereits zuvor einmal eine Anfrage an den zentralen Profilserver 6 gestellt und hat der zentrale Profilserver 6 den Client 12 zum Setzen eines Cookies veranlasst, so wird in dem Schritt 103 automatisch das Cookie von dem Client 12 an den zentralen Profilserver 6 übermittelt. In dem Cookie ist vorzugsweise eine dem Client 12 beziehungsweise dem Benutzer 11 zugewiesene Benutzerkennung abgespeichert, so dass der zentrale Profilserver 6 den Benutzer 11 beziehungsweise den Client 12 nach Erhalt des Cookies identifizieren kann.

In dem Schritt 104 überprüft der zentrale Profilserver 6 zunächst, ob der Client 12 ein Cookie mitgesendet hat. Ist dies nicht der Fall, so erzeugt der zentrale Profilserver 6 eine eindeutige Benutzerkennung und veranlasst den Client 12 in einem Schritt 105, ein diese Benutzerkennung beinhaltendes Cookie zu setzen.

In dem Schritt 106 startet der zentrale Profilserver 6 eine Anfrage an die lokalen Profilserver 4a, 4b, um zu erfahren, ob die lokalen Profilserver 4a, 4b über Profile 5a, 5b des Benutzers 11 beziehungsweise des Clients 12 verfügen. Liegen dem zentralen Profilserver 6 lediglich die IP-Adresse und/oder die Browser-ID vor, so kann der zentrale Profilserver 6 diese Informationen direkt an die lokalen Profilserver 2a, 2b übermitteln.

Vorzugsweise veranlasst der zentrale Profilserver 6 in dem Schritt 106 jedoch den Client 12, eine Anfrage an die Informationsserver 2a, 2b beziehungsweise die lokalen Profilserver 5a, 5b zu übermitteln. Dies kann beispielsweise dadurch geschehen, dass der zentrale Profilserver 6 in Beantwortung der von dem Client 12 in dem Schritt 102 an diesen gesandten Anfrage entsprechende Kommandos an den Client 12 übermittelt, die von dem Browser interpretiert werden und den Client 12 veranlassen, nun eine Anfrage an einen oder mehrere Informationsserver 2a, 2b beziehungsweise lokale Profilserver 4a, 4b zu richten. Bei jeder derartigen Anfrage wird automatisch ein Cookie an den betreffenden lokalen Profilserver 4a, 4b beziehungsweise Informationsserver 2a, 2b übermittelt, falls ein derartiges Cookie bei dem Client 12 gesetzt worden ist.

In einem Schritt 107 wird die Anfrage von den Informationsservern 2a, 2b beziehungsweise den lokalen Profilservern 4a, 4b empfangen und es wird in einem Schritt 108 geprüft, ob der Benutzer 11 beziehungsweise der Client 12 bei dem Informationsserver 2a, 2b beziehungsweise bei dem lokalen Profilserver 4a, 4b bekannt ist und/oder ob dort Profilinformationen vorliegen. Bei jedem lokalen Profilserver 4a, 4b, bei dem der Benutzer 11 beziehungsweise der Client 12 bekannt ist oder bei dem Profilinformationen bezüglich des Benutzers 11 oder des Clients 12 vorliegen, wird in einem Schritt 109 eine Benutzerkennung, die spezifisch für den jeweiligen Benutzer 11 beziehungsweise Client 12 und den lokalen Profilserver 4a, 4b ist, an den zentralen Profilserver 6 übermittelt.

Bei dem erfindungsgemäßen Verfahren kann vorgesehen sein, dass automatisch in einem Schritt 110 auch eine oder mehrere Profilinformationen von den lokalen Profilservern 4a, 4b an den zentralen Profilserver 6 übermittelt werden, falls diese vorliegt. Diese Profilinformationen können beispielsweise besonders aktuelle Profilinformationen enthalten.

In einem Schritt 111 wird die dem Benutzer 11 beziehungsweise dem Client 12 zugeordnete Benutzerkennungsliste 10 aktualisiert, falls von einem lokalen Profilserver 4a, 4b eine neue oder geänderte Benutzerkennung an den zentralen Profilserver 6 übermittelt worden ist. Die Benutzerkennungsliste 10 enthält damit für den Benutzer 11 beziehungsweise dem dem Benutzer 11 zugeordneten Client 12 eine Liste von Benutzerkennungen, unter der der Benutzer 11 beziehungsweise der dem Benutzer 11 zugeordnete Client 12 bei den lokalen Profilservern 4a, 4b beziehungsweise den Informationsservern 2a, 2b bekannt ist.

Wurden in dem Schritt 110 Profilinformationen an den zentralen Profilserver 6 übermittelt, so kann in einem Schritt 112 vorgesehen sein, dass diese Profilinformationen bei dem zentrale Profilserver 6 in das dem Benutzer 11 zugeordnete Profil 8 aufgenommen werden.

Insbesondere ist es vorteilhaft, wenn in dem Schritt 112 eine Plausibilität der erhaltenen und/oder bereits abgespeicherten Profilinformationen geprüft wird. Dies ist beispielsweise dann besonders sinnvoll, wenn sich die vorliegenden Profilinformationen desselben Benutzers 11 widersprechen. Um eine möglichst plausible Profilinformation abzuspeichern, kann vorgesehen sein, dass nur die aktuellste Profilinformation abgespeichert wird. Es kann aber insbesondere auch die Häufigkeit des Vorliegens einer Profilinformation herangezogen werden, so dass eine Profilinformation nur dann als plausibel angesehen wird, wenn eine Mehrzahl der von den lokalen Profilservern 2a, 2b erhaltenen Profilinformationen übereinstimmen. Die Minderzahl der hiergegen widersprechenden Profilinformationen wird dann nicht weiterverwendet, beziehungsweise es wird nur die plausibelste Profilinformation bei dem zentralen Profilserver 6 abgespeichert.

Es ist ferner vorstellbar, dass den lokalen Profilservern 4a, 4b Vertrauenswerte zugeordnet werden und bei sich widersprechenden Profilinformationen stets die Profilinformation ausgewählt wird, die von dem lokalen Profilserver 4a, 4b stammt, dem der höchste Vertrauenswert zugeordnet ist. Hierzu kann in dem zentrale Profilserver 6 eine Liste abgelegt oder es kann dem zentrale Profilserver 6 eine Datenbank zugeordnet sein, in der für jeden bekannten lokalen Profilserver 4a 4b der Vertrauenswert abgespeichert ist.

Das in Figur 3 dargestellte Verfahren zeigt, wie ein zentraler Profilserver 6 automatisch Zugang zu Profilinformationen eines Benutzers 11 erhält, die auf lokalen Profilservern 4a, 4b bzw. auf Informationsservern 2a, 2b, abgespeichert sind. Hierzu werden automatisch die Benutzerkennungen, unter denen der Benutzer 11 unter den lokalen Profilservern 4a, 4b bekannt ist, an den zentralen Profilserver 6 übermittelt und dort derart abgespeichert, dass der zentrale Profilserver 6 für jeden Benutzer 12 Zugriff auf die jeweilige Benutzerkennungen hat, unter der der Benutzer 12 bei den lokalen Profilservern 4a, 4b bekannt ist und unter der möglicherweise Profilinformationen abgelegt sind. Ferner können automatisch Profilinformationen, die den Benutzer 11 betreffen und die bei den lokalen Profilservern 4a, 4b abgespeichert sind, an den zentralen Profilserver übermittelt werden.

Wie oben bereits dargestellt, wird das Verfahren dadurch gestartet, dass der Benutzer 11 beziehungsweise der Client 12 eine Anfrage an einen Informationsserver 2a, 2b stellt. Die von dem Informationsserver 2a, 2b erhaltene Netzwerkseite beinhaltet ein Script oder einen Link zu dem lokalen Profilserver 6, auf dem dann ein Script ausgeführt wird.

Es sind eine Vielzahl von Techniken und Scriptsprachen bekannt, um den Client 12 beispielsweise mittels des Browsers zu veranlassen, eine Anfrage an den zentralen Profilserver 6 zu übermitteln und dann - nun durch den zentralen Profilserver 6 veranlasst - Anfragen an die lokalen Profilserver 4a, 4b zu übermitteln, insbesondere um die Benutzerkennung des Benutzers 11 beziehungsweise des dem Benutzer 11 zugeordneten Clients 12 an die in dem Client-Server System 1a, 1b vorhandenen lokalen Profilserver 4a, 4b zu übermitteln. Derartige Techniken umfassen den Einsatz von nicht sichtbaren Bildinformationen, die beispielsweise lediglich ein Pixel umfassen oder auf so genannten Iframes basierende Techniken, die es ermöglichen, dass bei Erhalt einer Netzwerkseite von einem Informationsserver 2a, 2b durch einen Client 12, der Client 12 automatisch Informationen von weiteren Informationsservern 2a, 2b, lokalen Profilservern 4a, 4b oder zentralen Profilservern 6 anfordert.

Da bei einer Informationsanforderung automatisch Informationen an den Server übermittelt werden, beispielsweise die IP-Adresse, eine Kennung einer Netzwerkkarte, eine Browser-ID und insbesondere ein von dem jeweiligen Server gesetztes Cookie, kann der Benutzer 11 beziehungsweise der Client 12 bei dem Server identifiziert werden. Erfindungsgemäß werden diese Benutzerkennungen automatisch an den zentralen Profilserver 6 übermittelt, der somit einen Überblick erhält, bei welchen lokalen Profilservern 4a, 4b Profilinformationen des Benutzers 11 beziehungsweise des Clients 12 abgespeichert sind und unter welcher Benutzerkennung der Benutzer 11 beziehungsweise der Client 12 dort registriert ist.

Besonders vorteilhaft ist es, wenn der zentrale Profilserver 6 beispielsweise in dem Schritt 105 automatisch eine Kennung erzeugt, die den aktuellen Durchlauf des erfindungsgemäßen Verfahrens kennzeichnet und beispielsweise als Session-ID bezeichnet wird. Diese kann automatisch an die lokalen Profilserver 4a, 4b übermittelt werden und wird bei der Übermittlung von Informationen von den lokalen Profilservern 4a, 4b an den zentralen Profilserver 6 hinzugefügt, so dass dieser die von den lokalen Profilservern 4a, 4b erhaltenen Benutzerkennungen beziehungsweise Profilinformationen dem Benutzer 11 beziehungsweise Client 12 zuordnen kann. Insbesondere ist hierbei auch eine Art Synchronisation möglich, so dass Informationen, die von mehreren lokalen Profilservern 4a, 4b erhalten werden, einander zugeordnet werden können.

Mittels des erfindungsgemäßen Verfahrens ist es folglich möglich, einen zentrale Profilserver 6 automatisch zu aktualisieren beziehungsweise mit weiteren Informationen zu versehen. Das erfindungsgemäße Verfahren und der erfindungsgemäße zentrale Profilserver 6 ermöglichen es irgendeinem weiteren Informationsserver, möglicherweise nach einer zuvor erfolgten Registrierung bei dem zentralen Profilserver 6, Profilinformationen über einen spezifizierten Benutzer 11 zu erhalten. Hierbei ist es unerheblich, welche Benutzerkennung dem anfragenden Informationsserver bekannt ist, da der zentrale Profilserver 6 bei jeder Anfrage in der Benutzerkennungsliste 10 nachsehen kann, unter welcher Benutzerkennung der Benutzer 11 bei dem zentrale Profilserver 6 und bei den lokalen Profilservern 4a, 4b bekannt ist. Hat der zentrale Profilserver 6 aktuelle Profilinformationen abgespeichert, so kann er diese an den Informationsserver weitergeben. Insbesondere ist es jedoch vorstellbar, dass der zentrale Profilserver 6 bei einer eingehenden Anfrage stets von einem, mehreren oder allen lokalen Profilservern 4a,4b aktuelle Profilinformationen anfordert. Dies ist erfindungsgemäß dadurch ermöglicht, dass dem zentrale Profilserver 6 die Benutzerkennungen vorliegen, unter denen der Benutzer 11 bei den lokalen Profilservern 4a, 4b bekannt ist. Der zentrale Profilserver 6 kann nun besonders aktuelle und/oder plausible Profilinformationen herausfiltern und diese an einen anfragenden Informationsserver weitergeben. Ferner kann der zentrale Profilserver 6 diese Profilinformationen selbst abspeichern.

Der erfindungsgemäße zentrale Profilserver 6 stellt somit plausible und aktuelle Profilinformationen bereit, wobei als Quelle eine Vielzahl von lokalen Profilservern 4a, 4b dienen können. Damit gewährleistet der zentrale Profilserver 6, dass Verfahren, die auf Profilinformationen basieren und eine Erhöhung der Relevanz von an einen Benutzer 11 zu übermittelnden Informationen betreffen, deutlich zuverlässiger arbeiten, so dass die Relevanz der ausgewählten Informationen nochmals erhöht ist.

Selbstverständlich können die in den Figuren 1 und 2 als lokale Profilserver 4a, 4b bezeichneten Profilserver selbst zentrale Profilserver sein, die ihrerseits mit anderen lokalen oder zentralen Profilservern nach dem erfindungsgemäßen Verfahren Benutzerkennungen ermitteln und/oder Profilinformationen austauschen.

Gemäß einer weiteren bevorzugten Ausführungsform des erfindungsgemäßen Verfahrens fordert der zentrale Profilserver von einer Mehrzahl von lokalen Profilservern Profilinformationen an und wählt automatisch mindestens eine Profilinformation aus, wobei die Auswahl in Abhängigkeit von einem Alter, einem Plausibilitätsvergleich oder einen den lokalen Profilservern zugeordneten Vertrauenswert erfolgt. Diese Ausführungsform ist insbesondere vorteilhaft, wenn mehrere gleichartige Profilinformationen eines Benutzers bei mehreren lokalen Profilservern abgespeichert sind. Der zentrale Profilserver wählt dann beispielsweise nur eine der gleichartigen Profilinformationen aus, indem er die jüngste und damit aktuellste Profilinformation bestimmt. Ferner können mehrere gleichartige Profilinformationen eines Benutzers herangezogen werden um zu entscheiden, ob eine oder mehrere dieser Profilinformationen beispielsweise der Mehrzahl widersprechen. Diese Profilinformationen können dann unberücksichtigt bleiben.

Sind mehrere gleichartige Profilinformationen eines Benutzers 11 bei mehreren lokalen Profilservern 4a, 4b verfügbar, so kann einem bevorzugten lokalen Profilserver 4a, 4b ein besonders hoher Vertrauenswert zugeordnet werden und es können stets nur Profilinformationen von diesem lokalen Profilserver 4a, 4b verwendet werden, vorausgesetzt dieser lokale Profilserver 4a, 4b verfügt über eine Profilinformation einer bestimmten Art. Nur wenn der lokale Profilserver mit dem höchsten Vertrauenswert nicht über eine Profilinformation verfügt, kann die Profilinformation von dem lokalen Profilserver mit nächsthöherem Vertrauenswert ausgewählt werden usw..

Mit dieser Ausführungsform wird also automatisch sichergestellt, dass bei einer Mehrzahl von lokalen Profilservern stets nur die plausibelsten, beispielsweise die aktuellsten oder sonstwie zutreffendsten Profilinformationen ausgewählt werden.

Besonders vorteilhaft ist es hierbei, wenn die ausgewählten Profilinformationen auf dem zentralen Profilserver automatisch abgespeichert werden. Dies stellt sicher, dass auf dem zentralen Profilserver nur - oder jedenfalls auch - die Profilinformationen höchster Qualität bereits abgespeichert sind und von diesem direkt abgefragt werden können.

Gemäß einer anderen bevorzugten Ausführungsform erhält der zentrale Profilserver 6 eine Anfrage, die eine Profilinformation oder einen Typ einer Profilinformation umfasst. Der zentrale Profilserver 6 ermittelt daraufhin einen Benutzer 11 beziehungsweise die einem Benutzer 11 zugeordnete Benutzerkennung, wobei der Benutzer 11 die Profilinformation oder eine Profilinformation des in der Anfrage angegebenen Typs aufweist. Der zentrale Profilserver 6 übermittelt dann die Benutzerkennung in Beantwortung der Anfrage. Dies ermöglicht es beispielsweise, zu einer vorgegebenen Klasse von Profilinformationen diejenigen Benutzer 11 beziehungsweise die Gruppe von Benutzern 11 herauszufinden, für die eine derartige Profilinformation abgespeichert ist. Dies kann beispielsweise vorteilhaft sein, um automatisch alle Benutzer 11 zu ermitteln, für die eine bestimmte Profilinformation bei den Informationsservern 2a, 2b beziehungsweise lokalen Profilservern 4a, 4b ursprünglich abgespeichert worden ist, beziehungsweise von diesen ermittelt worden ist. Dies erhöht nochmals den Einsatz des zentralen Profilservers 6 und kann beispielsweise sinnvoll sein, um zufällig ermittelte Informationen, die für eine bestimmte Benutzergruppe relevant sind, an diese automatisch zu übermitteln.

## Patentansprüche

1. Verfahren zum Betreiben eines Client-Server Systems (1a, 1b), bei dem ein Benutzer (11) mittels eines Clients (12) von einem Informationsserver (2a, 2b) eine Information anfordert und der Informationsserver (2a, 2b) Informationen an den Client (12) übermittelt, wobei dem Informationsserver (2a, 2b) mindestens ein lokaler Profilserver (4a, 4b) zugeordnet ist, **dadurch gekennzeichnet, dass**
- der Client (12) mittels der von dem Informationsserver (2a, 2b) übermittelten Informationen automatisch veranlasst wird, eine Anfrage an den zentralen Profilserver (6) zu senden;
- der zentrale Profilserver (6) den Benutzer (11) oder den Client (12) mittels einer zentralen Benutzerkennung identifiziert;
- falls der Benutzer (11) oder der dem Benutzer (11) zugeordnete Client (12) bei dem lokalen Profilserver (4a, 4b) bekannt ist, der zentrale Profilserver (6) den lokalen Profilserver (4a, 4b) veranlasst, eine lokale Benutzerkennung, unter der der Benutzer (11) oder der Client (12) bei dem lokalen Profilserver (4a, 4b) bekannt ist oder unter dem ein dem Benutzer (11) oder dem Client (12) zugeordnetes Profil (5a, 5b) bei dem lokalen Profilserver (4a, 4b) abgespeichert ist, an den zentralen Profilserver (6) zu übermitteln;
- der zentrale Profilserver (6) für den Benutzer (11) oder den Client (12) eine Benutzerkennungsliste (10) führt und in dieser eine den lokalen Profilserver (4a, 4b) bezeichnende Kennung und die lokale Benutzerkennung hinzufügt, falls die lokale Benutzerkennung nicht in der Benutzerkennungsliste (10) aufgeführt ist; und
- zumindest wenn nicht bereits eine den Client (12) oder den Benutzer (11) betreffende Profilinformation an den zentralen Profilserver (6) bei der Anforderung durch den Client (12) oder bei der Übermittlung der lokalen Benutzerkennung übermittelt worden ist, der zentrale Profilserver (6) in Abhängigkeit von dem Eintreten eines vorgebbaren Ereignisses von dem lokalen Profilserver (4a, 4b) eine Profilinformation unter Angabe der lokalen Benutzerkennung anfordert und der lokale Profilserver (4a, 4b) die Profilinformation an den zentralen Profilserver (6) übermittelt.

2. Verfahren nach Anspruch 1, **dadurch gekennzeichnet, dass** der zentrale Profilserver (6) die Plausibilität der von dem lokalen Profilserver (4a, 4b) übermittelte Profilinformation überprüft und in Abhängigkeit von einem Ergebnis der Überprüfung entscheidet, ob die Profilinformation verworfen oder abgespeichert bzw. weitergeleitet wird.

3. Verfahren nach Anspruch 2, **dadurch gekennzeichnet, dass** für die Prüfung der Plausibilität
- ein Alter der Profilinformation ausgewertet wird;
- die Profilinformation mit von anderen lokalen Profilservern (4a, 4b) übermittelten Profilinformationen bezüglich des Clients (12) oder Benutzers (11) verglichen wird und bestimmt wird, ob und gegebenenfalls wie weit die Profilinformationen voneinander abweichen; oder
- ein dem lokalen Profilserver (4a, 4b) zugeordneter Vertrauenswert ausgewertet wird.

4. Verfahren nach einem der vorangehenden Ansprüche, **dadurch gekennzeichnet, dass** der zentrale Profilserver (6) überprüft, ob für den Client (12) oder den Benutzer (11) eine zentrale Benutzerkennung existiert und wenn dies nicht der Fall ist, automatisch eine zentrale Benutzerkennung erzeugt.

5. Verfahren nach Anspruch 4, **dadurch gekennzeichnet, dass** der zentrale Profilserver (6) den Client (12) veranlasst, die Benutzerkennung abzuspeichern.

6. Verfahren nach einem der vorangehenden Ansprüche, **dadurch gekennzeichnet, dass**
- der zentrale Profilserver (6) eine Sitzungskennung erzeugt und veranlasst, dass diese zusammen mit der lokalen Benutzerkennung an den lokalen Profilserver (4a, 4b) übermittelt wird
- der lokale Profilserver (4a, 4b) die lokale Benutzerkennung zusammen mit der Sitzungskennung an den zentralen Profilserver (6) übermittelt.

7. Verfahren nach einem der vorangehenden Ansprüche, **dadurch gekennzeichnet, dass** der lokale Profilserver (4a, 4b) die Profilinformationen an den zentralen Profilserver (6) nur übermittelt,
- falls die Profilinformation nicht als vertraulich eingestuft ist; oder
- falls ein dem zentralen Profilserver (6) zugeordneter Vertrauenswert einen vorgebbaren Schwellwert überschreitet.

8. Verfahren nach einem der vorangehenden Ansprüche, **dadurch gekennzeichnet, dass** der zentrale Profilserver (6) auf eine Anfrage nach einer Profilinformation nur diejenigen Profilinformationen übermittelt, die von dem lokalen Profilserver (4a, 4b) stammen, dessen lokale Benutzerkennung mit der in der Anfrage genannten lokalen Benutzerkennung übereinstimmt.

9. Zentraler Profilserver (6), der über ein Kommunikationsnetzwerk (20) mit mindestens einem lokalen Profilserver (4a, 4b) verbindbar ist, **dadurch gekennzeichnet, dass** der zentrale Profilserver (6) zur Durchführung eines Verfahrens nach einem der Ansprüche 1 bis 8 hergerichtet ist, wenn der zentrale Profilserver (6) mit dem Kommunikationsnetzwerk (20) verbunden ist.

10. Client-Server System (1a, 1b), das einen Informationsserver (2a, 2b), einen lokalen Profilserver (4a, 4b), einen zentralen Profilserver (6) sowie einen Client (12) umfasst, **dadurch gekennzeichnet, dass** das Client-Server System (1a, 1b) Mittel zur Durchführung eines Verfahrens nach einem der Ansprüche 1 bis 8 aufweist.

11. Computerprogramm, das auf einem über ein Kommunikationsnetzwerk (20) verbundenen Client-Server System (1a, 1b), insbesondere einem zentralen Profilserver (6), ablauffähig ist, **dadurch gekennzeichnet, dass** ein Verfahren nach einem der Ansprüche 1 bis 8 ausgeführt wird, wenn das Computerprogramm auf dem Client-Server System (1a, 1b) abläuft und dass das Computerprogramm auf einem Speicherelement, insbesondere auf einem optischen oder magnetischen Speicherelement, abgespeichert ist.
